# EUROPEAN PATENT SPECIFICATION

(11) **EP 2 954 362 B1**
(45) Date of publication and mention of the grant of the patent: **30.08.2017**
(21) Application number: 14707013.0
(22) Date of filing: 05.02.2014
(51) Int. Cl.: G02B 6/44

(54) **FIBER OPTIC MULTIPORT**
GLASFASERMEHRFACHANSCHLUSS
MULTIPORT POUR FIBRE OPTIQUE

(30) Priority: 06.02.2013 US 201313760669
(43) Date of publication of application: 16.12.2015
(60) Divisional application: 17175935.0
(73) Proprietor: Corning Optical Communications LLC, Hickory, NC 28601 (US)
(72) Inventor: BARNETTE, JR., Robert Elvin, Hickory, North Carolina 28601 (US); TRAN, Hieu Vinh, Charlotte, North Carolina 28278 (US)
(74) Representative: Sturm, Christoph
(86) International application number: PCT/US2014/014764
(87) International publication number: WO 2014/123940

(56) References cited:
- WO-A1-2006/113726
- US-A1- 2006 133 759
- US-A1- 2006 147 172
- US-A1- 2006 153 517
- US-A1- 2006 269 208

## Description

### PRIORITY APPLICATIONS

This application is a continuation of International Application No. PCT/US14/14764, filed on February 5, 2014, which claims the benefit of priority to U.S. Application No. 13/760,669, filed on February 6, 2013.

### BACKGROUND

Aspects of the present disclosure relate generally to fiber optic multiports.

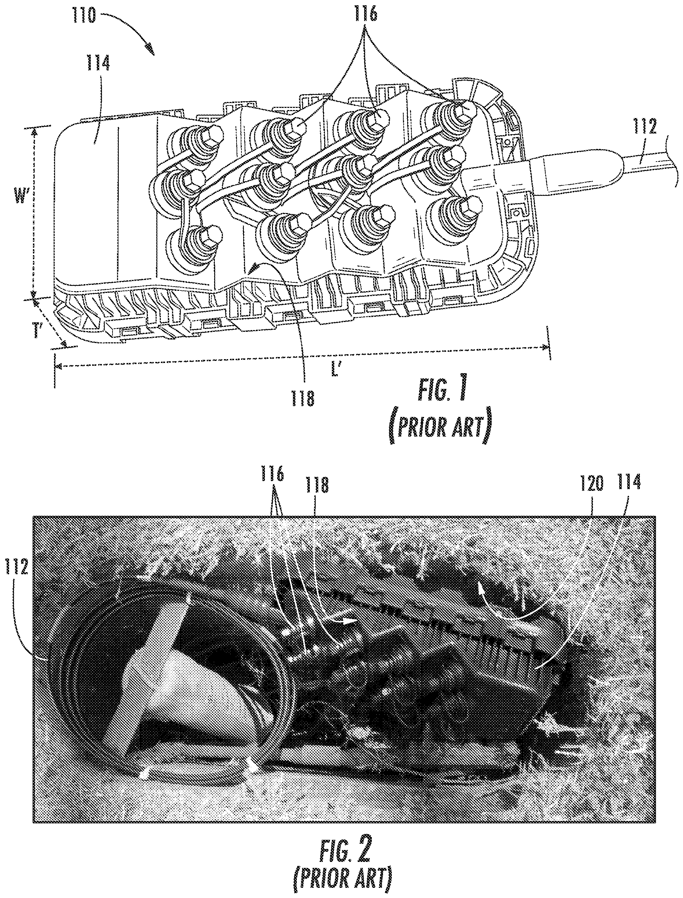

Referring to FIG. 1, conventional fiber optic multiports, such as multiport 110, typically receive a trunk cable 112 carrying an arrangement of optical fibers. The multiport 110 receives the optical fibers in a housing 114. As shown in FIG. 1, the housing 114 may include multiple ports 116, which are each optically connected to the trunk cable 112 through the housing by way of the optical fibers. The ports may be used for mating with connectors attached to branching cables such as for "fiber-to-the-home" applications. During use, optical signals pass through the branch cables, to and from the trunk cable 112 by way of the multiport 110.

While being large enough to support all of the associated hardware of the multiple ports 116, the housing 114 of the multiport 110 is typically constructed to be tough and weatherable. For example, the housing 114 may allow the multiport 110 to be stored in underground containers or on the exterior of structures, such as telecommunications antenna, that may be exposed to water, freezing temperatures, and other elements.

However, the housing 114 of the multiport 110 may be excessively bulky. For example, the multiport 110 may be too boxy and inflexible to effectively operate in smaller storage spaces, such as the underground pit 120 shown in FIG. 2. Furthermore, having all of the ports 116 on the same face 118 of the housing 114, as shown in FIGS. 1-2, may cramp branch cables and associated connectors attached to the multiport 110. While pits can be widened and larger storage containers can be used, such solutions tend to be costly. A need exists for a multiport that conveniently fits in tight or unusually-arranged storage spaces, while providing the functionality of conventional multiports and/or improving thereupon by allowing faster and easier access to the ports for connection of branching cables.

US 2006/147172 A1 is directed to conventional fiber optic multiports. The conventional fiber optic multiports have the ports attached to the housing through an exterior wall of an outer surface of the housing and require a relatively large surface area for mounting the ports in an array.

WO 2006/113726 A1 discloses terminations having an MT connector on a first end and one or more sign port connectors on a second end. The breakout of the factory integrated terminations are provided by a conventional overmolded body for environmental protection in outside applications.

US 2006/269208 A1 is directed to a terminal for connecting customers to an optical fiber network. The terminal requires termination connectors that are mounted to a wall of housing.

### SUMMARY

The invention provides a fiber optic multiport according to claim 1.

Additional features and advantages are set forth in the Detailed Description that follows, and in part will be readily apparent to those skilled in the art from the description or recognized by practicing the embodiments as described in the written description and claims hereof, as well as the appended drawings. It is to be understood that both the foregoing general description and the following Detailed Description are merely exemplary, and are intended to provide an overview or framework to understand the nature and character of the claims.

### BRIEF DESCRIPTION OF THE FIGURES

The accompanying Figures are included to provide a further understanding, and are incorporated in and constitute a part of this specification. The drawings illustrate one or more embodiments, and together with the Detailed Description serve to explain principles and operations of the various embodiments. As such, the disclosure will become more fully understood from the following Detailed Description, taken in conjunction with the accompanying Figures, in which:
FIG. 1 is a top perspective view of a conventional multiport.
FIG. 2 is a digital image from a side perspective of the multiport of FIG. 1 positioned above a storage pit.
FIG. 3 is a perspective view of a multiport according to a comparative embodiment.
FIG. 4 is a perspective view of a housing of the multiport of FIG. 3
FIG. 5 is an exploded view from a side perspective of the housing of FIG. 4.
FIG. 6 is a top view of the housing of FIG. 4.
FIG. 7 is a top view of a first piece of the housing of FIG. 4.
FIG. 8 is a bottom view of a second piece of the housing of FIG. 4, the second piece configured to mate with the first piece of the housing of FIG. 7.
FIG. 9 is a top view of optical fiber slack stored in the housing of FIG. 4.
FIG. 10 is a perspective view of routing of optical fibers in the housing of FIG. 4.
FIG. 11 is a perspective view of a portion of the housing of FIG. 4 for receiving a multi-fiber connector.
FIG. 12 is a top view of the portion of the housing of FIG. 11 with a multi-fiber connector therein.
FIG. 13 is a perspective view of a set of ports bound to one another with a collar according to a comparative embodiment.
FIG. 14 is a top perspective of a multiport according to another comparative embodiment.
FIG. 15 is a digital image from a top perspective of the multiport of FIG. 14 positioned in the pit of FIG. 2.
FIG. 16 is a top perspective of a multiport according to yet another comparative embodiment.
FIG. 17 is a perspective view of a housing of a multiport according to an exemplary embodiment of the invention.
FIG. 18 is an exploded view from a side perspective of another housing for a multiport according to another exemplary embodiment of the invention.
FIG. 19 is a top view of a first piece of the housing of FIG. 18.
FIG. 20 is a rear perspective view of the first piece of the housing of FIG. 18.
FIG. 21 is a perspective view of an extension organizer of the housing of FIG. 18.
FIG. 22 is a rear end view of the extension organizer of FIG. 21 showing the openings for securing extensions thereto.
FIG. 23 is a front end view showing a plurality of extensions secured to the extension organizer of FIG. 21.
FIG. 24 is a perspective view of the second piece of the housing of FIG. 18.

### DETAILED DESCRIPTION

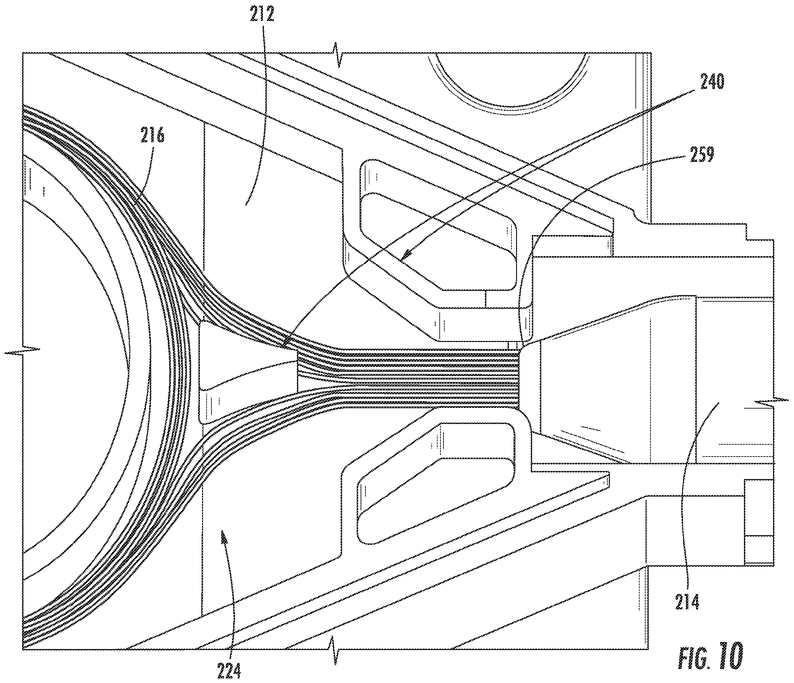

Before turning to the Figures, which illustrate exemplary embodiments now described in detail, it should be understood that the present inventive and innovative technology is not limited to the details or methodology set forth in the Detailed Description or illustrated in the Figures. For example, as will be understood by those of ordinary skill in the art, features and attributes associated with embodiments shown in one of the Figures may be applied to embodiments shown in others of the Figures. Figures 1-17 show comparative embodiments.

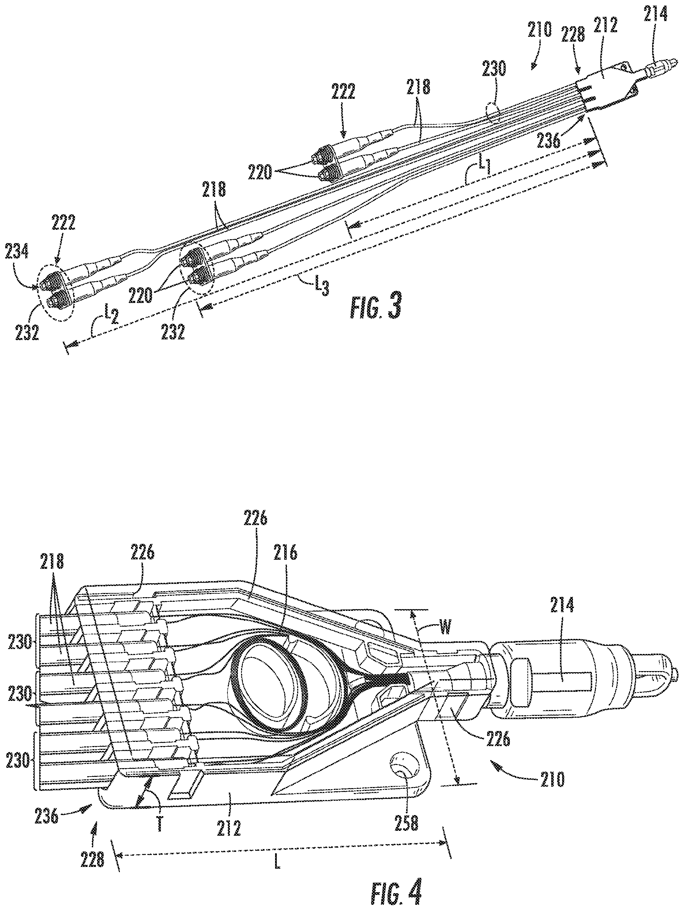

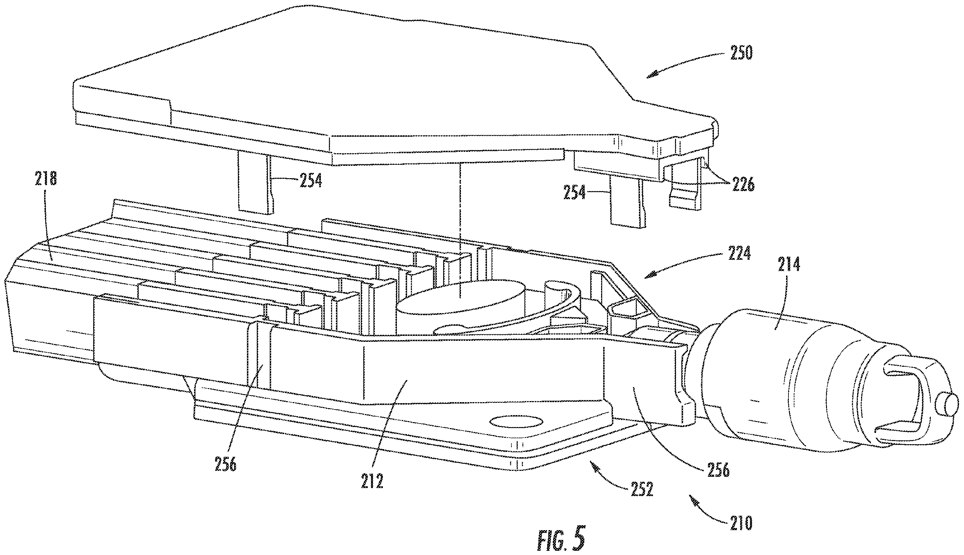

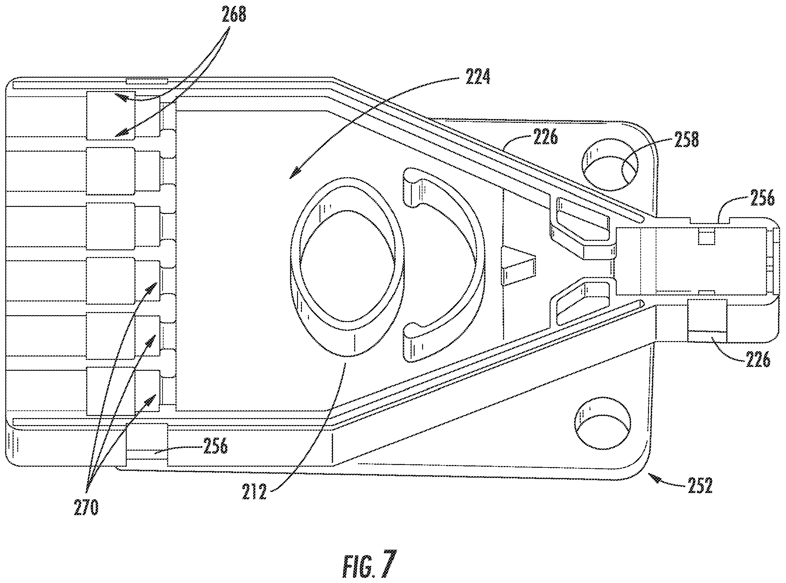

Referring to FIG. 3, a fiber optic multiport 210 includes a housing 212, a multi-fiber connector 214 (e.g., twelve-fiber connector) coupled to the housing 212, a plurality of optical fibers 216 (FIG. 4), extensions 218, and ports 220 connected to distal ends 222 of the extensions 218. The housing 212 defines an enclosure 224 (e.g., interior volume; see FIGS. 5 and 7-8) and includes interlocking structure 226 (e.g., shells, parts; see FIGS. 7-8) that seals off the enclosure 224 from the outside environment. The plurality of optical fibers 216 are connected to and extend from the multi-fiber connector 214 into the enclosure 224 of the housing 212. The extensions 218 have proximal ends 228 attached to the housing 212 and the extensions 218 project away from the housing 212. The extensions 218 support sub-sets (e.g., one fiber each, two fibers each, different numbers of fibers per sub-set) of the plurality of optical fibers 216; and, in some embodiments, the extensions 218 are flexible such that the extensions 218 may bend independently of one another. The ports 220 are coupled in communication with the multi-fiber connector 214 by way of the optical fibers 216 passing through the enclosure 224 of the housing 212.

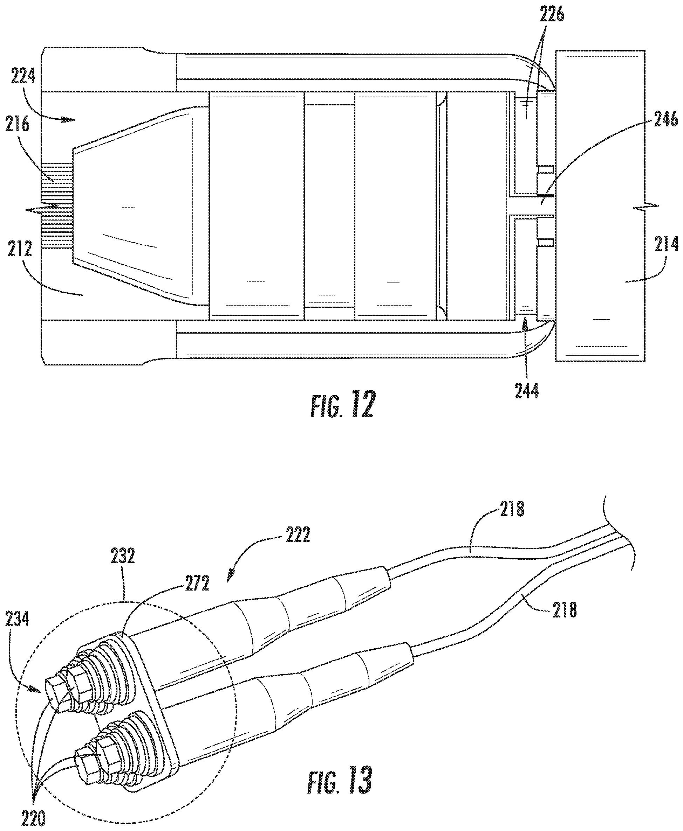

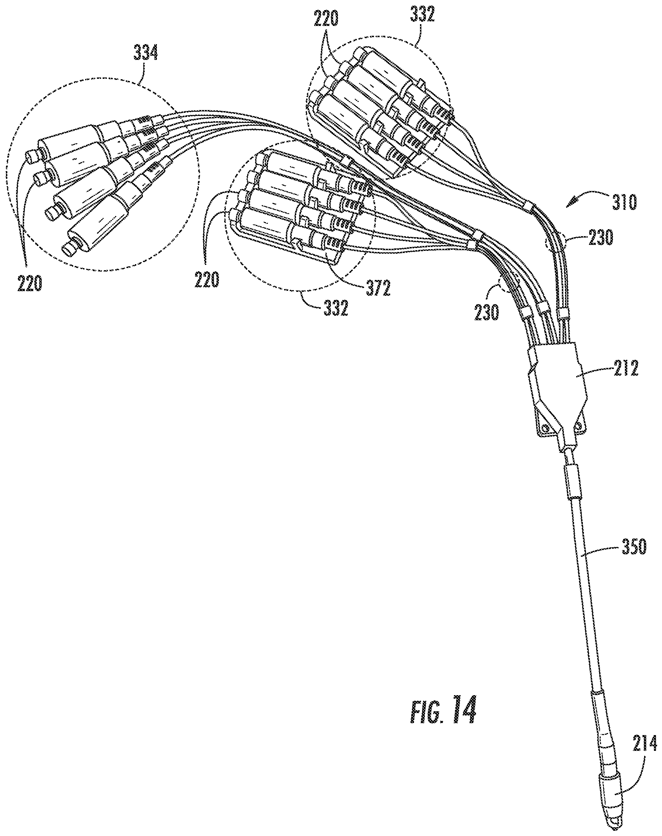

According to an exemplary embodiment, at least two of the extensions 218 (e.g., at least four) are the same lengths L₁ as one another, such as within 5% of the longest of the lengths L₁, when both extensions 218 (or all of the group) are fully extended. In some embodiments, at least two of the extensions 218 (e.g., at least three) are different lengths L₁, L₂, L₃ from one another, such as where the shorter extension 218 is not within 5% of the length of the longer extension 218. In some such embodiments, the multiport 210 may include at least two groups 230 of the extensions 218, where extensions 218 within each group 230 are the same length L₁ as one another, but where lengths L₁, L₂ of the extensions 218 differ between the two groups 230. As such, sets 232 of ports 222 corresponding to the two groups 230 of extensions 218 may be staggered relative to one another in distance from the housing 212 (see set 232 as shown in FIG. 13; see also sets 332, 334 as shown in FIG. 14).

For example, as shown in FIG. 3, the multiport 210 may include three groups 230 of extensions 218 with four extensions 218 in each group 230 such that the multiport 210 includes twelve ports 220 that are arranged in three staggered sets 232. According to an exemplary embodiment, each of the extensions 218 is at least 100 mm in length L₁, such as at least about 300 mm in length L₁. For the embodiment shown in FIG. 3, a first group 230 is at least 300 mm in length L₁, a second group 230 is longer than the first group 230 by at least 100 mm and is at least 500 mm in length L₂, and a third group 230 is longer than the second group 230 by at least 100 mm and is at least 700 mm in length L₃.

Grouping of the extensions 218 and providing corresponding sets 232 of ports 220 achieves organizational benefits of smaller multi-ports (e.g., four-port multiports) for each set 232, but without the corresponding bulk of even a smaller conventional multiport. Furthermore, removing the ports 220, and the corresponding dust covers and other connector and/or adapter hardware, from rigid attachment directly to the housing 212 allows the housing 212 of the multiport 210 to be considerably smaller than conventional multi-ports (e.g., multiport 110). Referring to FIG. 4, the length L of the housing 212 (not including the multi-fiber connector 214), such as for embodiments having twelve extensions 218, is 200 mm or less, such as 150 mm or less, such as about 100 mm or less (e.g., about 95 mm); the width W of the housing 212 is 100 mm or less, such as 75 mm or less, such as about 50 mm or less (e.g., about 48 mm); and the thickness T of the housing 212 is 25 mm or less, such as 20 mm or less, such as about 15 mm or less (e.g., about 15 mm).

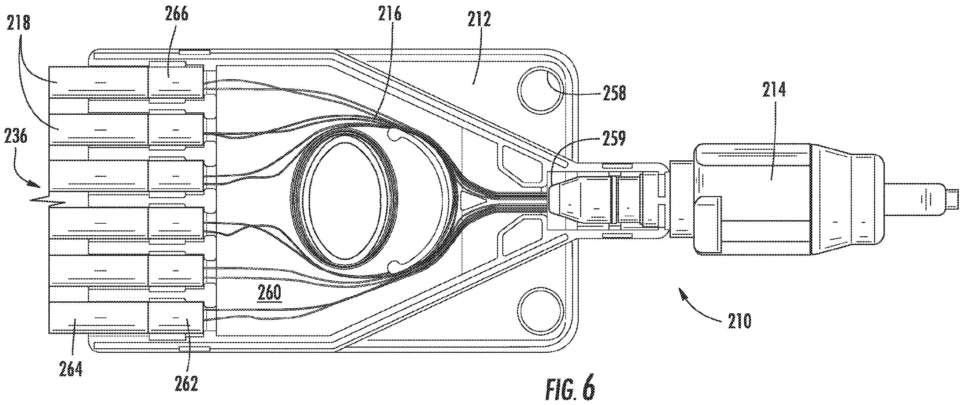

Comparing FIG. 1 to FIG. 4, conventional twelve-fiber multiports (e.g., multiport 110) may be about four times as long L' and the length L of the housing 212, about three times as wide W' as the width W of the housing 212, and about four times thicker T' than the thickness T of the housing 212. Applicants have found that separating the ports 220 from the housing 212 by way of the extensions 218 removes much of the surface area requirements of the housing 212. The net area (i.e., combined, sum area) of the end faces 234 (FIG. 13) of the ports 220, for some exemplary embodiments disclosed herein, is greater than the area of the corresponding face 236 (FIG. 6; e.g., side) from which the extensions 218 project from the housing 212. In some embodiments, this net area of the ports 220 is at least twice the area of the housing face 236, such as more than three times the area of the housing face 236. For example, for a twelve-port embodiment, each port 220 may have a round end face 234 of about 20 mm in diameter (including a dust cap, which is typically used with hardened ports of multiports; see, e.g., ports 116 of multiport 110 as shown in FIG. 1). Regarding the embodiment of FIG. 3, the face 236 of the housing 212 from which the extensions 218 project is about 750 mm², while the net area of the twelve end faces 234 of the ports 220 is almost 4000 mm².

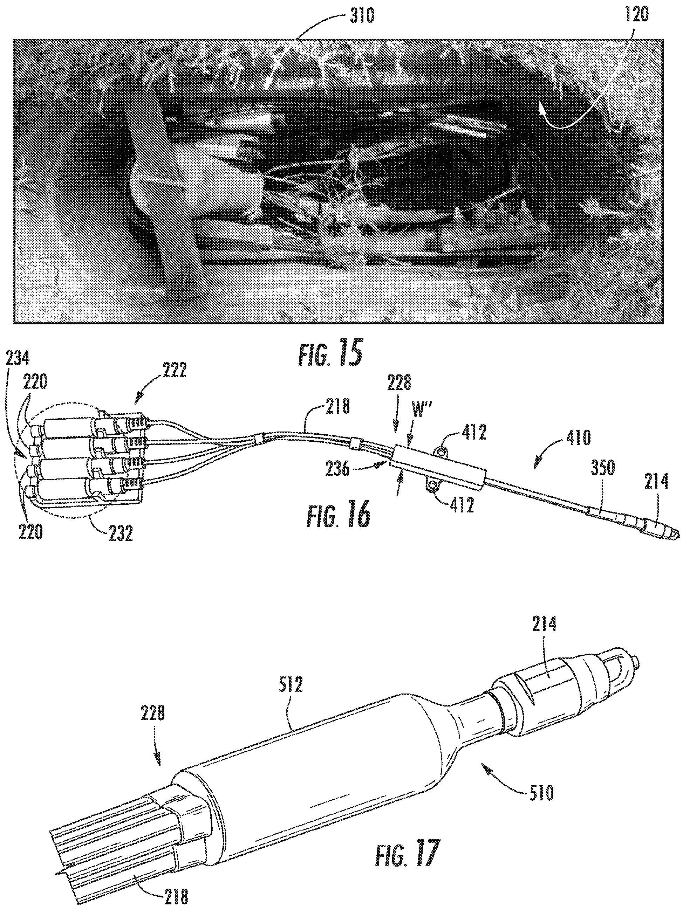

With the reduced bulkiness of the housing 212, the multiport 210 is able to fit in much smaller pits or other storage areas, and with the flexibility of the extensions 218, the ports 220 (which may be arranged in sets 232) may be positioned where convenient and accessible. Further, the multiport 210 is configured to operate in atypical storage geometries, such as narrow elongate spaces, where the multiport 210 is fully stretched out; curved spaces, where the extensions 218 bend into the curves; as well as stout rectangular pits, as shown in FIG. 15, where the extensions 218 are folded around the interior of the pit 120.

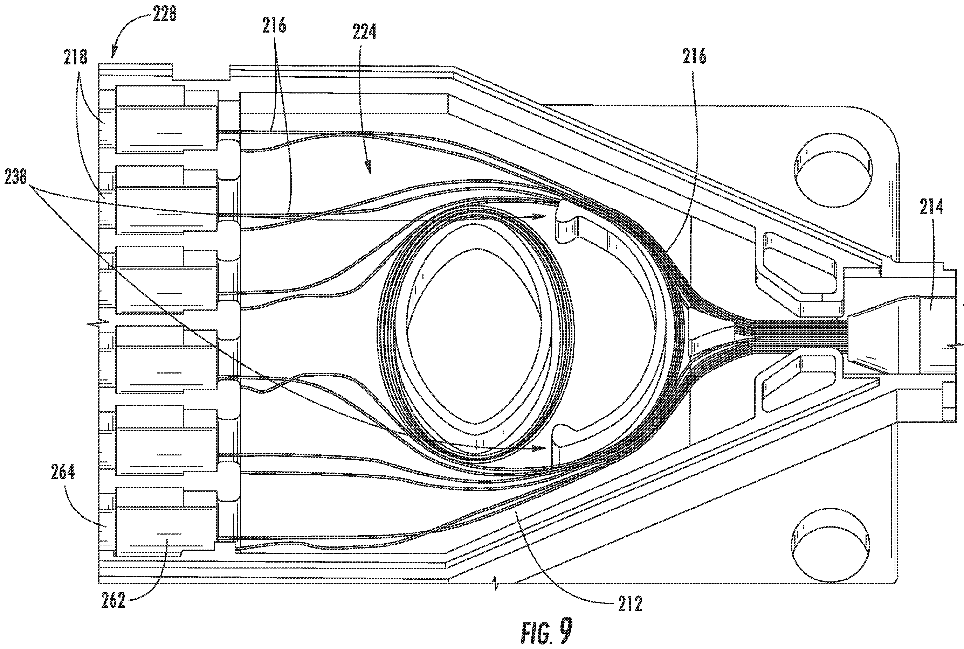

Referring now to FIGS. 6 and 9-10, the multiport 210 includes space in the enclosure 224 and guides 238 for storing slack (e.g., extra length) of the optical fibers 216. The slack of the optical fibers 216 may be used to adjust the length of particular extensions 218; or may be used as a source of additional fiber length when a port is replaced on the end of an extension 218, without decreasing the length of the extension 218. In some embodiments, the guides 238 include round features (e.g., surfaces, posts, walls) over which the slack of the optical fibers 216 is routed to control bending of the optical fibers 216 (i.e., inhibit sharp bending or pinching of optical fibers). For example, the round surfaces of the guides 238 in FIG. 9 correspond to a circular arc with a diameter of between 30 and 10 millimeters (mm), such as a diameter of between 25 and 15 mm (e.g., 24 mm).

According to an exemplary embodiment, an optical fiber 216 wrapped around the guides 238 includes at least 30 mm of slack (i.e. length of optical fiber 216 section wrapped around the guide 238), such as at least 50 mm of slack. In some embodiments, most or even all of the optical fibers 216 of the multiport 210 include at least 50 mm of slack per optical fiber 216. In some embodiments, some of the slack is wrapped clockwise around the guides 238, while other slack is wrapped counterclockwise. Additional guide features 240, which may be used in conjunction with the round features 238, may parse the optical fibers 216 within the enclosure 224 between the multi-fiber connector 214 and the extensions 218 such that bending of the optical fibers 216 within the enclosure 224 never passes below a minimum threshold radii, such as 5 mm, corresponding to a limit of the optical fiber before a sharp increase in delta attenuation.

According to an exemplary embodiment, slack of the optical fibers 216 may be used instead of replacing optical fibers 216 to attach new or different ports 220 to the extensions 218. In some such embodiments, one or more of the optical fibers 216 of the multiport 210 continuously extends between the multi-fiber connector 214 and a respective one of the ports 220, without splicing other optical fibers 216 therebetween. In some embodiments, most or even all of the optical fibers of the multiport 210 continuously extend between the multi-fiber connector 214 and a respective one of the ports 220. In still other contemplated embodiments, one or more of the optical fibers 216 is fusion- or mechanically-spliced within the housing 212.

According to an exemplary embodiment, the multiport 210 is particularly rugged and weatherproof. In some embodiments, the enclosure 224, formed by the housing 212, is completely sealed off from the outer environment by interlocking structure of the housing 212. For example, the housing 212 may prevent water penetration of the enclosure 224 when the housing 212 is submerged in a 3.04 m (10-foot) pressure head of water for seven days. Further, the housing 212 may be formed from tough polymers that are resistant to corrosion and other forms of wear. The rugged housing 212 allows outdoor deployment of the multiport 210, as may be required for applications providing "fiber-to-the-home" in residential areas.

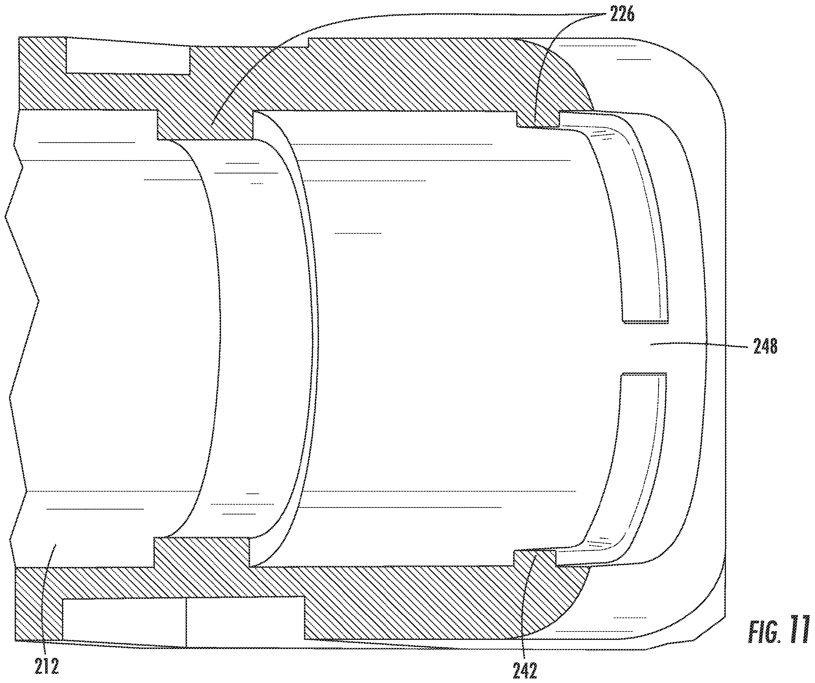

Referring now to FIGS. 11-12, in some embodiments the multi-fiber connector 214 is rigidly fixed directly to the housing 212 and sealed thereto with an integral flange 242 and groove 244 connection. The flange 242 and groove 244 extend around the connector 214 exterior and within an interior edge of the housing 212. The groove 244 may be on the housing 212 and the flange 242 may be on the connector 214, and/or vice versa. Additional pin(s) 246 and slot(s) 248 may be used to rotationally orient and lock the connector 214 into place with respect to the housing 212. However, in other embodiments, as shown in FIG. 14, the multi-fiber connector 214 may positioned on an extension 350, providing greater flexibility as to the orientation of the multi-fiber connector 214 with respect to a corresponding trunk cable (see, e.g., trunk cable 112 as shown in FIG. 1).

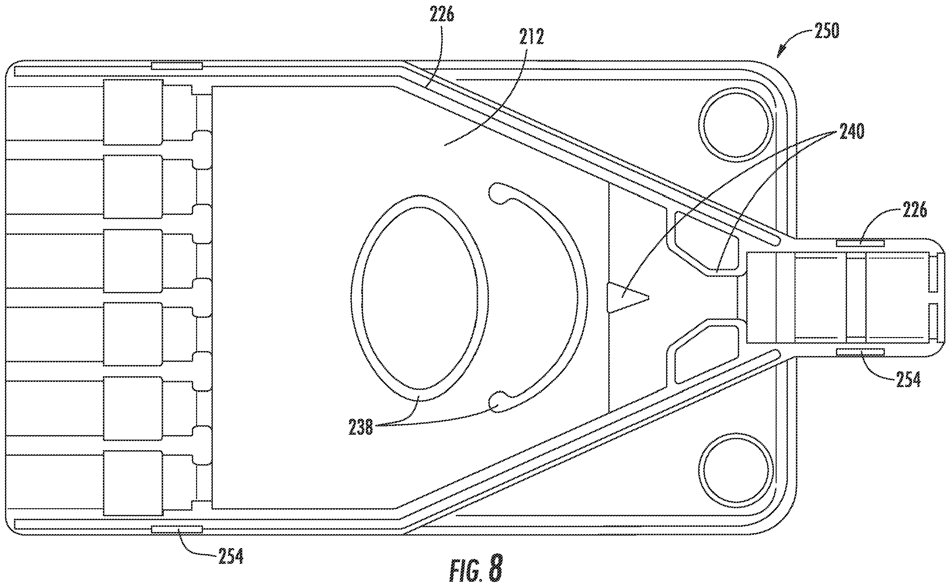

Still referring to the rugged structure of the housing 212, as shown in FIGS. 7-8, the housing 212 includes interlocking structure 226 that seals off the enclosure 224 from the environment. In some embodiments, the interlocking structure 226 of the housing 224 includes separate housing pieces 250, 252 that define walls of the enclosure 224, such as a cover piece 250, shown in FIG. 8, which interlocks with a base piece 252, as shown in FIG. 7. The pieces 250, 252 may be aligned as shown in FIG. 5 and fastened together to, at least in part, form the housing 212. One or more of the pieces 250, 252 may be translucent.

Edges of the pieces 250, 252 may be mortised together to seal the enclosure 224. In other embodiments, a separate gasket may be used. Latching features 254 and grooves 256 may be used to guide and attach the pieces 250, 252 of the housing 212 together. In still other embodiments, welds, sealants, or other means are used to attached and/or seal the housing 212. Holes 258 in the housing 212 may be used for mounting the housing 212, such as to a wall of a pit 120 or antenna tower. Additional holes in the housing (not shown) may be used to attach screws or other fasteners, which may reinforce or further seal the housing 212.

In some embodiments, the space within the enclosure 224 is filled with a potting material, which may be applied after the extensions 218 have been fully connectorized (and optical fiber slack is no longer of use). The potting material, such as epoxy, may increase toughness of the multiport 210, such as by further water-blocking the optical fibers 216 and providing increased crush resistance. In some such embodiments, the multiport 210 withstands loads of at least 90.72 kg (200 lbf) distributed over a 25.8 cm² (four-square-inch) circle applied to the center of the top side 260 thereof (where the top side 260 is shown in FIG. 6), without permanent deformation of the housing 212. The multi-fiber connector 214 may further comprise a grommet 259 on the end where the optical fibers 216 extend from the multi-fiber connector 214 for improving sealing robustness such as shown in FIG. 6. Stated another way, the grommet 259 inhibits potting material from wicking into the multi-fiber along with providing a water-proof seal at that location. In other embodiments, the interior space of the enclosure 224 is left open, without a potting material, which may provide options for future refitting of ports 220 using the slack.

According to an exemplary embodiment, the extensions 218 are anchored to the housing 212. In some embodiments, epoxy is used to lock the proximal ends 228 of the extensions 218 to the housing 212. In some embodiments, strength members 262 within the extensions (e.g., aramid yarn, glass-reinforced-plastic rods) are fastened or otherwise locked into the housing 212. As shown in FIG. 6, aramid yarn strength members 262 are pulled from the proximal ends 228 of the extensions 218 and wrapped backward over a jacket 264 of the extensions 218.

Crimp bands 266 (FIG. 6) may be used to hold the strength members 262 to the exterior of the jackets 264 of the extensions 218. Further, in some embodiments, the housing 212 of the multiport 210 may include slots 268 (FIG. 7) to receive the crimp bands 266, such that the crimp bands 266 lock the strength members 262, and the slots 268 of the housing 212 lock the crimp bands 266, which may then be epoxied within the housing 212 to further reinforce the attachment of the extensions 218 and seal the housing 212. Tabs 270 or gates may be used to seal unused openings in the housing 212, such as when the housing 212 has a capacity for more extensions 218 than are used.

Referring now to FIG. 13, ports 220 within each set 232 of ports 220 may be coupled to one another with a collar 272. The ports 220 may be oriented in an array, such as a 2×2 square or a 1×4 line, as shown with the collar 372 of FIG. 14. Binding a set 232 of the ports 220 together in an array may help with organizing the ports 220. Alternatively, as shown with the set 334 in FIG. 14, some or all of the ports 220 may be unconnected to others of the ports 220. For example, the multiport 220 of FIG. 14 includes two sets 332 with 1×4 arrays bound by collars 372 and a third set 334 of four ports 220 where the ports 220 are free to move independently of one another. In contemplated embodiments, collars may be used to bind pairs of ports 220, or other numbers of ports 220 to one another. FIG. 15 shows the multiport 310 of FIG. 14 positioned in the pit 120 of FIG. 2, showing the versatility of the multiports 210, 310, 410, 510 disclosed herein.

Referring to FIG. 16, in some embodiments a multiport 410 is a four-port 220 multiport 410 with features similar to those shown and discussed with regard to the multiports 210, 310 of FIGS. 3-15. Notably, the four-port 220 multiport 410 of FIG. 16 has a width W" that is a third of the width W of the multiport 210 (excluding the dimensions of the fastening holes 412), with the length and thickness being the same as the multiport 210. As shown in FIG. 17, a housing 512 of a multiport 510 may be cylindrical or otherwise shaped, while still including the features and attributes disclosed herein with regard to the multiports 210, 310, 410 shown in FIGS. 3-16.

The construction and arrangements of the multiport, as shown in the various exemplary embodiments, are illustrative only. Although only a few embodiments have been described in detail in this disclosure, many modifications are possible (e.g., variations in sizes, dimensions, structures, shapes, and proportions of the various members, values of parameters, mounting arrangements, use of materials, colors, orientations, etc.) without materially departing from the scope of appended claims. For example, while the extensions 218 are shown in FIGS. 3-17 as including polymeric jackets 264 with interior strength members 262 and having a diameter of the thickness T of the housing 212 or less, in contemplated embodiments the extensions may be armored (metallic- or dielectric-armored), may include strength members embedded in the jacket, may be aerial drop cable self-supporting up to a length of at least 20 m, may be low-smoke-zero-halogen rated, plenum-rated, riser-rated, may be "flat" drop cable, or may be otherwise structured. Some elements shown as integrally formed may be constructed of multiple parts or elements, the position of elements may be reversed or otherwise varied, and the nature or number of discrete elements or positions may be altered or varied. The order or sequence of any process, logical algorithm, or method steps may be varied or re-sequenced according to alternative embodiments. Other substitutions, modifications, changes and omissions may also be made in the design, operating conditions and arrangement of the various exemplary embodiments without departing from the scope of appended claims.

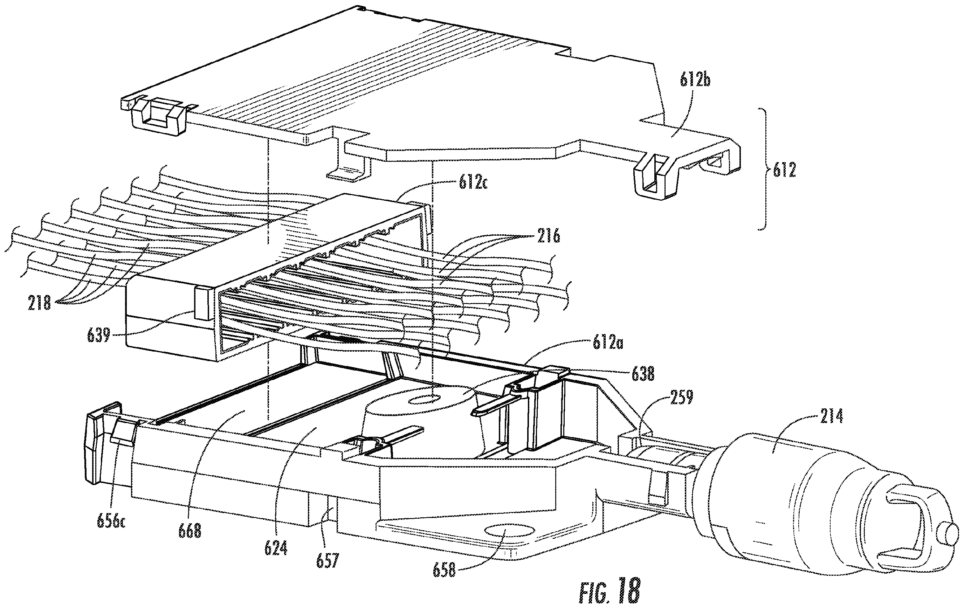

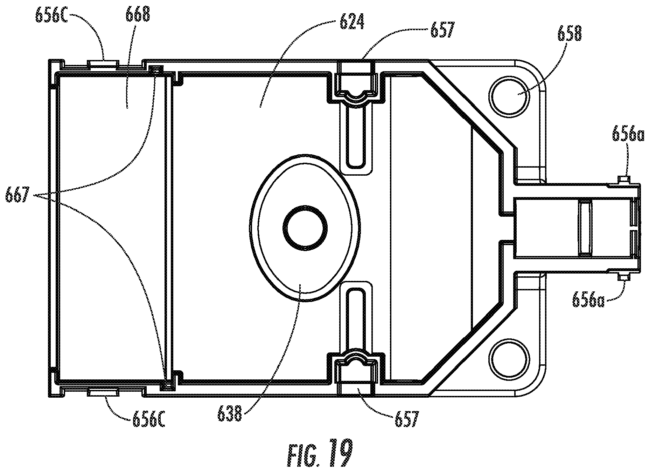

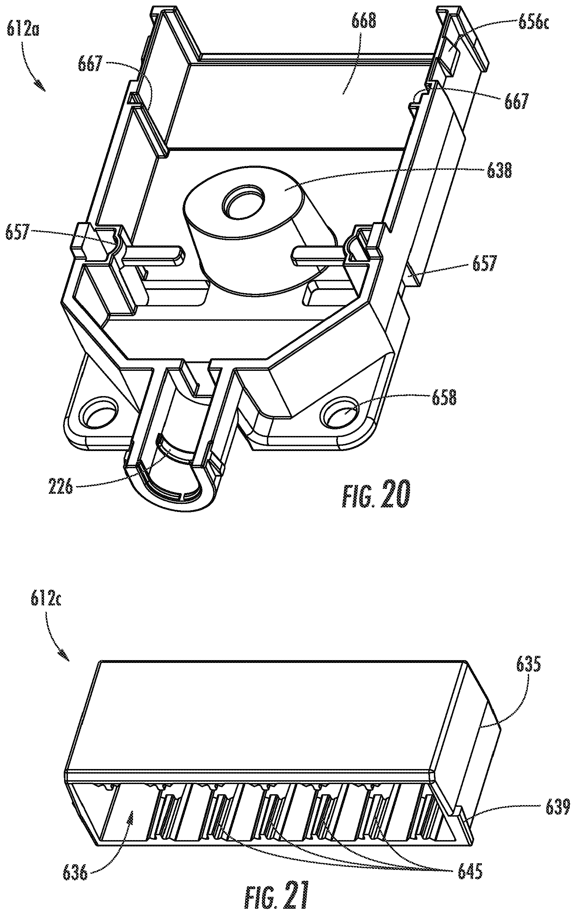

Still other variations of housings are possible for fiber optic multiports according to the concepts disclosed. FIGS. 18-24 depict portions of another variation of a housing 612 that is similar to housing 212. FIG. 18 is an exploded view of housing 612 formed from multiple pieces that may be used as a portion of the multiports disclosed. Housing 612 has a first piece 612a, a second piece 612b, and an extension organizer 612c as shown. When assembled, extension organizer 612c is configured for fitting into a mounting area 668 at a front end of the first piece 612a and is sandwiched between the first piece 612a and second piece 612b. FIG. 19 is a top view of first piece 612a of housing 612 and FIG. 20 is a rear perspective view of the first piece 612a showing details.

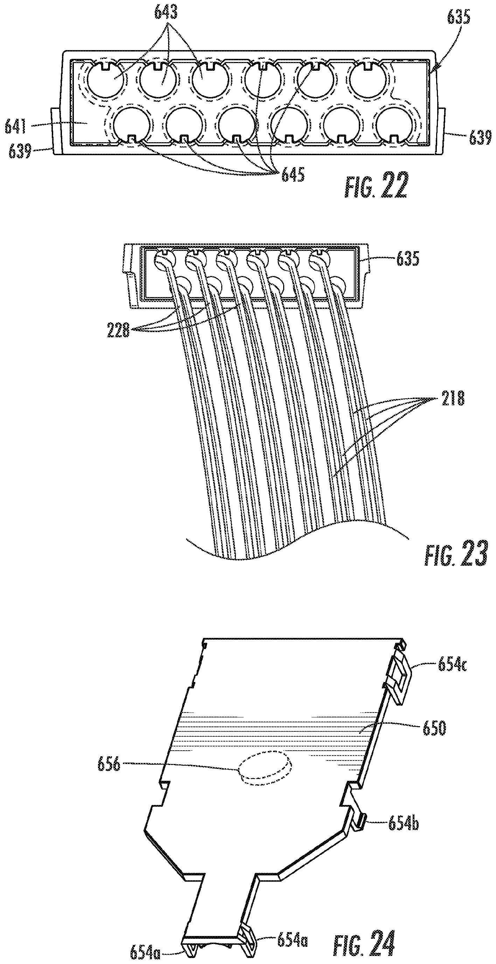

Housing 612 defines an enclosure 624 with a portion at the rear for receiving multi-fiber connector 214 as shown. The multi-fiber connector 214 may also include one or more grommets or O-rings for aiding the sealing of the multi-fiber connector in the housing along with having a flange and/or groove. By way of example, multi-fiber connector 214 may include a grommet 259 on the end where the optical fibers 216 extend from the multi-fiber connector 214 as shown in FIG. 18. Like the other housing embodiments disclosed, the area for securing multi-fiber connector 214 to housing 612 can have similar features and/or structure and will not be described again in further detail for the sake of brevity. Housing 612 allows a plurality of optical fibers 216 connected to the multi-fiber connector 214 to extend into the enclosure 624. When assembled, extensions 218 have respective proximal ends 228 (FIG. 23) that are attached to the housing 612 and the extensions project away from a face (e.g. the extension organizer) of the housing 612. As with the other multiports, the extensions 218 support sub-sets of the plurality of optical fibers 216. Further, ports 220 are connected to distal ends 222 of the extensions 218 like the other multiports disclosed herein. The optical fibers 216 may extend from the multi-fiber connector 214 without splicing the optical fibers or with splicing as desired. The extensions 218 may be flexible so they may be bend independently to one another. Also the area of the face of the extension organizer 612c may be less than the net area of the forward end-faces of the ports 220.

FIG. 21 is a perspective view of the extension organizer 612c of housing 612. Extension organizer 612c has a body 635 with a passageway 636 that extends from a rear end to a front end. FIG. 22 is a rear end view of the extension organizer 612c showing a wall 641 that has a plurality of openings 643 for securing extensions 218 therein. Openings 643 are used for receiving and securing a plurality of extensions 218 therein. Extension organizer 612c also includes a plurality of fingers 645 for seating a crimp band of the extension 218 in the extension organizer 612c. Extension organizer 612c also includes one or more tabs 639 for aligning the extension organizer 612c with the first piece 612a. FIG. 23 depicts the extension organizer

FIG. 23 is a front end view showing a plurality of extensions 218 routed in respective openings 643 of the extension organizer 612c. The extensions 218 are threaded from the rear of the extension organizer into respective openings 643. Extension organizer 612c may include a plurality of fingers keys 645 for aligning a crimp band 266 if used for securing strength members to the extension as discussed herein. Once all of the plurality of extensions 218 are seated they may be secured within the extension organizer 612c by using a potting material such as an epoxy or the like within the passageway 636 and held by wall 641. Further, the strength members of the respective extensions can be embedded within the potting material for providing strain relief.

FIG. 24 is a perspective view of the second piece 612b of the housing 612. Second piece 612a has a generally planar surface 650 that cooperates with the first piece 612a and defines the enclosure 624 when assembled. Second piece 612b also includes a plurality of latching features 654a, 654b, 654c for securing it to the first piece 612a. The sub-assembly of the extension organizer 228 with the attached extensions 218 has the optical fibers 216 routed about guide 638 and is placed into the first piece 612a by aligning tabs 639 with respective slots 667 on the first piece 612a. Then, the second piece 612b can be secured to the first piece 612a of housing 612. Specifically, the rear portion of second piece 612b includes latching features 654a disposed on each side for cooperating with protrusions 656a on first piece 612a and securing the first and second pieces of housing 612 about the multi-fiber connector 214. The middle portion of second piece 612b includes latching features 654b disposed on each side for cooperating with windows 657 on first piece 612a and securing the pieces of the housing 612 together. The front portion of second piece 612b includes latching features 654c disposed on each side for cooperating with respective protrusions 656c on first piece 612a for securing the pieces of the housing 612 together.

Once the housing 612 is assembled with the optical fibers 216 in position, the space within the enclosure 624 may optionally be filled with a potting material. The potting material, such as epoxy, may increase toughness of the multiport, such as by further water-blocking the optical fibers 216 and providing increased crush resistance. In this embodiment, windows may be formed on the bottom of the first piece 612a for filing the enclosure with the potting material. Housing 612 may also have optional holes 658 in the housing 612 for mounting the housing 212 if desired. Housing 612 or other housings may also include one or more optional features so that multiple housings of different multiports can be connected or stacked together for organization management. By way of example, housing 612 may include an optional mounting protrusion 656 on the second piece such as shown in phantom lines in FIG. 24 that may cooperate with a recess such as formed by the guide 638 on the bottom of the first piece 612a of a second housing for securing or stacking housings together with an interlocking friction fit or the like. In other words, when the housings are stacked in an interlocking arrangement the mounting protrusion 656 fits into a recess formed by the underside of guide 638. Further, the other features disclosed herein for multiports such as extension groupings, extension lengths, and extensions for the multiport may be used with housing 612 as desired.

## Claims

1. A fiber optic multiport, comprising:
a housing (612), wherein the housing (612) defines an enclosure (624) comprising a first piece (612a), a second piece (612b) and an extension organizer (612c), wherein the extension organizer (612c) comprises a wall (641) with a plurality of openings (643) and is configured for fitting into a mounting area (668) at a front end of the first piece (612a) and is sandwiched between the first piece (612a) and the second piece (612b);
a multi-fiber connector (214) coupled to the housing (612);
a plurality of optical fibers (216) connected to and extending from the multi-fiber connector (214) into the enclosure (624);
extensions (218) having a proximal end (228) attached to the plurality of openings (643) of the extension organizer (612c) of the housing, the extensions (218) projecting away from a face of the housing (612), wherein the extensions (218) support sub-sets of the plurality of optical fibers (216); and
ports (220) connected to distal ends (222) of the extensions (218), wherein the area of the face of the housing (612) is less than the net area of forward end-faces (234) of the ports (220), and wherein the ports (220) are coupled in communication with the multi-fiber connector (214) by way of the plurality of optical fibers passing through the enclosure (624) of the housing.

2. The multiport of claim 1, wherein the multi-fiber connector (214) is rigidly fixed directly to the housing (612) and wherein the ports (220) are attached to the housing (612) by way of the extensions (218), which are flexible such that the extensions (218) may bend independently of one another.

3. The multiport of either one of claims 1 or 2, wherein the housing (612) seals off the enclosures from the environment, wherein the multi-fiber connector (214) is integrated with the housing (612) by way of a flange interfacing a groove, the flange and groove extending around the multi-fiber connector (214) and along an interior edge of the housing (612) such that the interface of the flange and groove seals the integration of the multi-fiber connector (214) with the housing (612) and axially secures the multi-fiber connector (214), and wherein the flange and groove are adjoined by a pin and slot that orient that multi-fiber connector (214) and limit rotation relative to the housing (612).

## Patentansprüche

1. Glasfaser-Mehrfachanschluss, umfassend:
ein Gehäuse (612), wobei das Gehäuse (612) eine Hülle (624) definiert, umfassend ein erstes Stück (612a), ein zweites Stück (612b) und einen Erweiterungsorganisierer (612c), wobei der Erweiterungsorganisierer (612c) eine Wand (641) mit mehreren Öffnungen (643) umfasst und konfiguriert ist zum Einfügen in einen Montagebereich (668) an einem Vorderende des ersten Stücks (612a) und zwischen das erste Stück (612a) und das zweite Stück (612b) geschichtet ist;
einen Mehrfaserverbinder (214), der an das Gehäuse (612) gekoppelt ist;
mehrere Glasfasern (216), die mit dem Mehrfaserverbinder (214) verbunden sind und sich von diesem in die Hülle (624) erstrecken;
Erweiterungen (218) mit einem proximalen Ende (228), an den mehreren Öffnungen (643) des Erweiterungsorganisierers (612c) des Gehäuses angebracht, wobei die Erweiterungen (218) von einer Fläche des Gehäuses (612) weg vorstehen, wobei die Erweiterungen (218) Teilmengen der mehreren Glasfasern (216) stützen; und
Anschlüsse (220), die mit distalen Enden (222) der Erweiterungen (218) verbunden sind, wobei der Bereich der Fläche des Gehäuses (612) kleiner ist als der Nettobereich von vorderen Endflächen (234) der Anschlüsse (220), und wobei die Anschlüsse (220) in Kommunikation mit dem Mehrfaserverbinder (214) über die mehreren Glasfasern gekoppelt sind, die durch die Hülle (624) des Gehäuses hindurchgehen.

2. Mehrfachanschluss nach Anspruch 1, wobei der Mehrfaserverbinder (214) starr direkt am Gehäuse (612) fixiert ist und wobei die Anschlüsse (220) an dem Gehäuse (612) über Erweiterungen (218) angebracht sind, die flexibel sind, so dass sich die Erweiterungen (218) unabhängig voneinander biegen können.

3. Mehrfachanschluss nach einem der Ansprüche 1 oder 2, wobei das Gehäuse (612) die Hüllen gegenüber der Umgebung abdichtet, wobei der Mehrfaserverbinder (214) mit dem Gehäuse (612) über einen an eine Nut grenzenden Flansch integriert ist, wobei sich der Flansch und die Nut um den Mehrfaserverbinder (214) und entlang einem inneren Rand des Gehäuses (612) erstrecken, so dass die Grenzfläche des Flansches und der Nut die Integration des Mehrfaserverbinders (214) mit dem Gehäuse (612) abdichtet und den Mehrfaserverbinder (214) axial sichert, und wobei an den Flansch und die Nut ein Stift und ein Schlitz angrenzen, die diesen Mehrfaserverbinder (214) orientieren und eine Drehung relativ zum Gehäuse (612) begrenzen.

## Revendications

1. Multiport pour fibre optique, comprenant :
un boîtier (612), le boîtier (612) définissant une enceinte (624) comprenant un premier morceau (612a), un deuxième morceau (612b) et un organiseur de prolongateurs (612c), l'organiseur de prolongateurs (612c) comprenant une paroi (641) avec une pluralité d'ouvertures (643) et étant configuré pour s'installer dans une zone de montage (668) à une extrémité avant du premier morceau (612a) et étant intercalé entre le premier morceau (612a) et le deuxième morceau (612b) ;
un connecteur multifibre (214) couplé au boîtier (612) ;
une pluralité de fibres optiques (216) reliées à et s'étendant depuis le connecteur multifibre (214) jusqu'à l'intérieur de l'enceinte (624) ;
des prolongateurs (218) ayant une extrémité proximale (228) attachée à la pluralité d'ouvertures (643) de l'organiseur de prolongateurs (612c) du boîtier, les prolongateurs (218) faisant saillie depuis une face du boîtier (612), les prolongateurs (218) supportant des sous-ensembles de la pluralité de fibres optiques (216) ; et
des ports (220) reliés aux extrémités distales (222) des prolongateurs (218), la surface de la face du boîtier (612) étant inférieure à la surface nette de faces d'extrémité avant (234) des ports (220), et les ports (220) étant couplés en communication avec le connecteur multifibre (214) au moyen de la pluralité de fibres optiques traversant l'enceinte (624) du boîtier.

2. Multiport de la revendication 1, dans lequel le connecteur multifibre (214) est solidement fixé directement au boîtier (612) et dans lequel les ports (220) sont attachés au boîtier (612) au moyen des prolongateurs (218), qui sont souples de telle sorte que les prolongateurs (218) peuvent se plier indépendamment les uns des autres.

3. Multiport de l'une ou l'autre des revendications 1 ou 2, dans lequel le boîtier (612) protège de façon étanche les enceintes de l'environnement, dans lequel le connecteur multifibre (214) est intégré au boîtier (612) au moyen d'un rebord interagissant avec une rainure, le rebord et la rainure s'étendant autour du connecteur multifibre (214) et le long d'un bord intérieur du boîtier (612) de telle sorte que l'interface du rebord et de la rainure scelle l'intégration du connecteur multifibre (214) au boîtier (612) et fixe axialement le connecteur multifibre (214), et dans lequel le rebord et la rainure sont assemblés par une goupille et une fente qui orientent ce connecteur multifibre (214) et limitent la rotation par rapport au boîtier (612).
